# EUROPEAN PATENT SPECIFICATION

(11) **EP 3 681 828 B1**
(45) Date of publication and mention of the grant of the patent: **03.11.2021**
(21) Application number: 18842826.2
(22) Date of filing: 11.09.2018
(51) Int. Cl.: B65G 47/90, B65G 61/00, B65G 47/91, B65G 57/00, B65G 57/03, B65G 60/00, B65G 59/04

(54) **GRIPPING AND HANDLING DEVICE FOR PALLETS AND FOR LAYER PADS FOR PALLETIZED LOADS AND RELATIVE METHODS**
VORRICHTUNG UND VERFAHREN ZUM GREIFEN UND HANDHABEN VON PALETTEN UND ZWISCHENLAGEN VON PALETTIERTEN LADUNGEN SOWIE ZUGEHÖRIGE VERFAHREN
DISPOSITIF DE PRÉHENSION ET DE MANIPULATION POUR PALETTES ET POUR INTERCALAIRES POUR CHARGES PALETTISÉES ET PROCÉDÉS ASSOCIÉS

(30) Priority: 11.09.2017 IT 201700101543
(43) Date of publication of application: 22.07.2020
(73) Proprietor: Bema S.r.l., 42030 Viano (Reggio Emilia) (IT)
(72) Inventor: SFORACCHI, Gianluca, 42030 Viano (RE) (IT)
(74) Representative: Feltrinelli, Secondo Andrea
(86) International application number: PCT/IB2018/056931
(87) International publication number: WO 2019/049104

(56) References cited:
- CN-A- 105 417 181
- CN-U- 206 475 470
- GB-A- 2 205 300
- JP-A- H03 223 035
- US-A1- 2009 238 672
- US-A1- 2015 063 970
- SMI S.p.A.: "APS 1550 P palletizer", You Tube, 4 February 2016 (2016-02-04), pages 1-6, XP054978366, Retrieved from the Internet: URL:https://www.youtube.com/watch?v=BPU_A_ n2aNI [retrieved on 2018-05-24]

## Description

### TECHNICAL FIELD OF THE INVENTION

The present invention regards a device for gripping and handling pallets and/or layer pads, i.e. paper or plastic sheets for example, to be arranged beneath or in an intermediate position in palletised loads. Furthermore, relative methods for changing and positioning the pallets and/or layer pads are also presented.

In particular, the present invention regards a gripping and handling device that is fixed to a multiple axis movement mechanism for example a robot of the anthropomorphic or Cartesian type.

### STATE OF THE PRIOR ART

In the automated packaging industry, it is important to be able to position the pallet precisely with respect to the load, the protection layer pads on the pallet and between one layer and the other of the load and also be able to change the pallet and the relative positioning for a new load of products quickly, especially with the aim of obtaining a subsequent wrapping step that is stable and can be obtained in quick times. Furthermore, if the palletised product is quite light, there also arises the need of having to superimpose two palletised loads one on the other.

The latter function is required especially in the paper industry, but possibly in other industries too, for example foodstuffs, etcetera.

These industries require quite low palletised loads, with heights of about 1100-1200 mm., and given that the loading compartments of the delivery trucks - with a lowered loading deck - are generally more than 2400 mm. high, the two palletised loads must be superimposed one on the other to obtain a good exploitation of the loading space.

Besides the device for palletising products on the pallet, which is generally a robot, in plants of the known type a pallet discharger or dispenser is usually provided, which can also pick up and add the layer pads, a pallets or layer pads centring device for positioning the pallets or layer pads precisely; a device is also provided for superimposing pallets of palletised loads, i.e. a device that allows to superimpose two pallets of palletised loads in the palletisation area.

Thus, these devices determine a given overall dimension on the palletisation line. Besides this, times are slow due to the sequence of operations required to form the palletised load.

As a matter of fact, the operating sequence provides for picking up a pallet using the pallet discharger or dispenser device, centring the pallet using the pallets or layer pads centring device, picking up the centred pallet once again and depositing it in the palletised load forming position, picking up a layer pad using the pallet discharger or dispenser device which is used to pick up the layer pad in this case, centring the layer pad using the pallets or layer pads centring device, picking up the centred layer pad once again and depositing it in the palletised load forming position by inserting the layer pads on the pallet and between one layer and the other of the load during the formation of the palletised load. Layer pads previously centred manually by an operator can be possibly arranged, but the intervention of an operator is required in this case, and thus the layer pad centring step can be skipped.

Lastly, to form a group of two superimposed loads, there arises the need to wait for the formation of two palletised loads and then superimpose them using the pallet superimposing device.

As observable, the entire sequence is rather tedious, slow and requires engaging various devices, thus increasing the overall dimensions on the line, same case applying to the possible manual intervention of an operator who is required arrange the layer pads in a centred manner.

Patent application n. US2015/0063970A1, describes an equipment for the palletisation of a plurality of objects according to the preamble of claim 1.

The equipment of the patent application n. US2015/0063970A1 comprises: a system for transporting and arranging a plurality of objects to form an arranged set of objects; a movement system consisting of a support column on which a first movement member - suitable to move the arranged set of objects from an unloading position of the transportation and arrangement system to a pallet arranged on a work station - is moveably arranged together with a second movement member suitable to move a pallet from a stack of pallets to the work station and/or a cardboard layer pad from a respective stack to the work station. In the equipment illustrated in US2015/0063970A1, the pallets and the layer pads are arranged in previously centred stacks and thus it is necessary to provide for the centring of the pallets and layer pads using other centring devices or manually. Thus, there arises the need for additional space for the devices for centring the pallets and layer pads or there arises the need for the presence of operators for manual centring, with an extension of the operating tines and an increase of costs due to additional manpower.

### OBJECTS OF THE INVENTION

The present invention has the objective of improving the state of the art.

In this technical context, providing a device for gripping and handling pallets and/or layer pads that allows overcoming the aforementioned drawbacks is an object of the present invention.

Another object of the present invention is to provide a device for gripping and handling pallets and/or layer pads that can combine several functions in a single device and that is the quickest possible with respect to the devices of the known type.

This task and these objects are achieved by the device for gripping and handling pallets and/or layer pads according to claim 1 and by the methods according to claims 9-12.

The dependent claims refer to preferred and advantageous embodiments of the invention.

### BRIEF DESCRIPTION OF THE DRAWINGS.

The characteristics of the invention will be clearer to any man skilled in the art from the following description and from the attached drawings, provided by way of non-limiting example, wherein:
figure 1 is a perspective view of the device for gripping and handling pallets and layer pads according to the present invention;

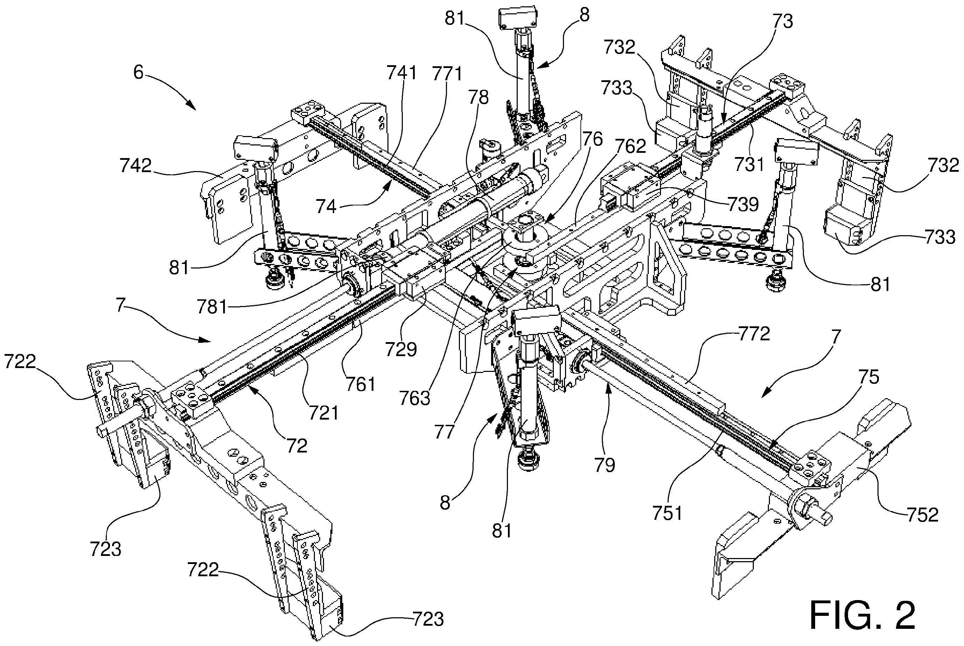

figure 2 is a perspective view of the device of figure 1 with some parts removed for greater clarity;

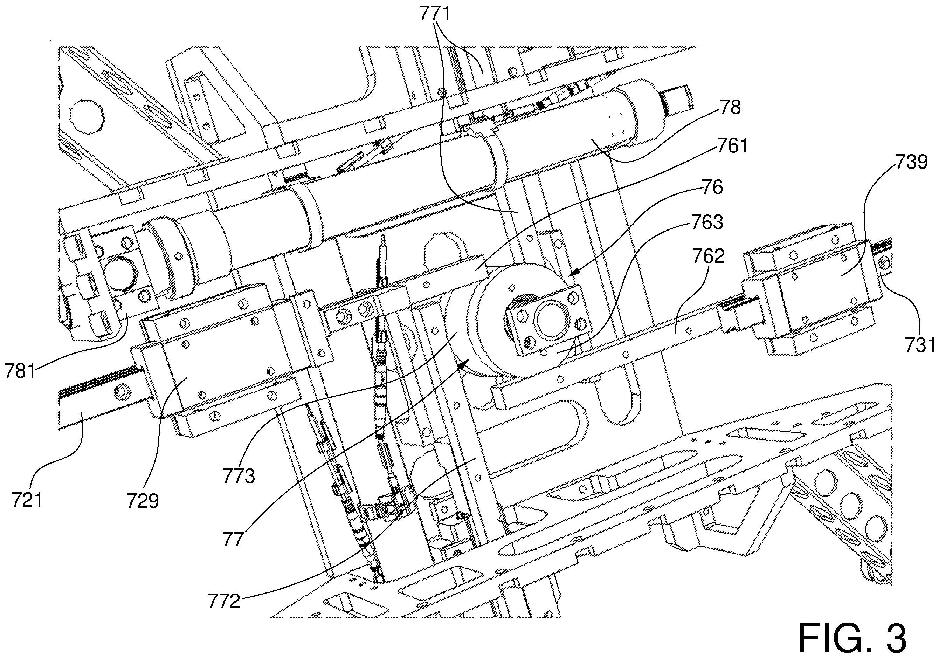

figure 3 is a perspective view of some details of the device subject of the preceding figures; and
figure 4 is an exploded perspective view of the device for gripping and handling pallets and layer pads according to the present invention.

### EMBODIMENTS OF THE INVENTION.

With reference to the attached figures, the device for gripping and handling pallets and/or layer pads, according to the present invention is indicated in its entirety with 1.

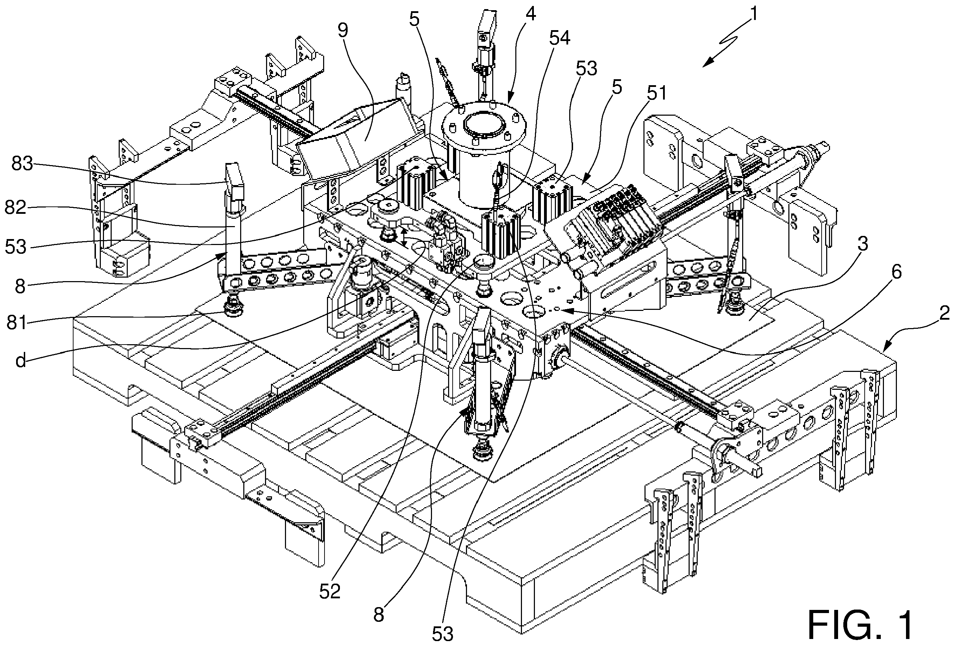

Figure 1 illustrates a pallet 2 and layer pad 3 which are not part of the device 1 and which are gripped and handled by the device 1 as better clarified hereinafter. The device 1 is provided with an attachment flange 4 for a multiple axis movement mechanism (not illustrated), for example a robot of the anthropomorphic or Cartesian type.

The device 1 for gripping and handling pallets and layer pads, according to the present invention, essentially comprises:
a first anti-collision safety group 5, fixed to the attachment flange 4, with means for detecting the vertical position of the pallet and/or of the layer pad to be picked up;
a second group 6, connected to the first group 5, for the gripping, centring of the pallet and/or of the layer pad and with safety function with regard to accidentalpallet falls, essentially comprises a first section 7 for gripping the pallets, for centring the pallets and/or the layer pads, and a second section 8 for gripping the layer pads; and
a control unit 9 for supervising and controlling the functions of the device 1.

The first group 5 comprises a support plate 51 to which the attachment flange 4 is fixed, the control unit 9 and connection means 52 for connecting the first group 5 to the second group 6 maintaining the possibility of a certain movement between the two groups 5 and 6, according to a substantially vertical axis Z.

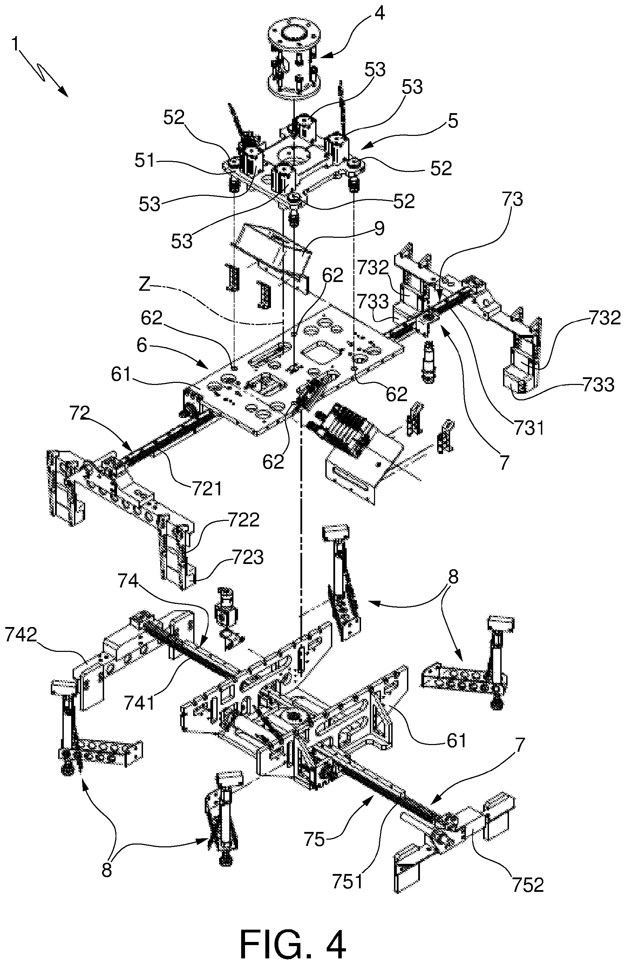

In the embodiment illustrated in the figures, the connection means between the first group 5 and the second group 6 provide for a given number of holes arranged on the plate 51 at a given distance one from the other, and within such holes a corresponding number of pins 52 are slidably arranged, provided on the upper end of a head with greater diameter of the holes, while in the lower end the pins 52 are fixed in corresponding holes 62 that are located in the underlying second group 6 (figure 4).

Furthermore, the first group 5 comprises elastic elements 53, which keep the second group 6 pressed moving away - at a predefined distance "d" - from the first group 5, and a certain number of end-stops 54, which detect reductions of the distance "d", arranged on the plate 51 in proximity of the pins 52 or elastic elements 53.

Should, for any reason, the second group 6 draw near to the first group 5, each of the end-stops is capable of detecting the reduction of the distance "d".

Should only some of the end-stops detect the reduction of the distance "d", for example should the movement of the second group 6 be oblique with respect to the first group 5, this could mean that some part of the second group 6 has collided for example with the stack of pallets or layer pads or with other objects accidentally present in the work area of the device 1.

Thus, this could be the case of faulty positioning of some pallet or layer pad in the stacks of pallets or layer pads, or a hazardous situation, and thus the control unit 9 stops the displacement of the device 1 and a new displacement cycle can be possibly repeated, but only after reporting such situation to an operator.

If all end-stops detect a reduction of the distance "d", then the movement of the second group 6 with respect to the first group 5 is only vertical, according to axis Z, and it indicates that, for example, the top part of the stack of pallets or layer pads has been touched.

In this case the group 5 serves as probe means capable of detecting the vertical position of the pallet and/or of the layer pad to be picked up.

The elastic elements can be simple acting pneumatic cylinders 53 fixed to the plate 51 with the stem thereof pressing on the second group 6 so as to maintain the heads of the pins 52 abutting against the plate 51.

The cylinders 53 can incorporate the end-stops 54, that for example can be of the magnetic type capable of detecting possible displacement of the plunger within the cylinder 53 with respect to the normal operative position with the second group 6 kept moving away from the first group 5.

In the embodiment of the figures, the pins 52, the cylinders 53 and the end-stops 54 are four arranged in a square in proximity of the corners of the plate 51, which is also substantially square-shaped.

However, it should be observed that the pins 52, the cylinders 53 and the end-stops 54, in particular the latter, can also be a number different from four.

For example, the end-stops 54 can be three arranged in the vertices of a triangle, because the three points are the minimum condition for defining a plane, or five, six, etcetera, arranged in the vertices of respective regular or irregular polygons: pentagon, hexagon, etcetera.

Furthermore, the elastic elements 53 and the end-stops 54 can be obtained differently, for example with mechanical springs and micro-switches, or other equivalent devices.

The pins 52, the elastic elements 53 and the end-stops 54 with the relative control means constitute a safety device against collisions, when only some of the end-stops 54 are actuated, and a probe device when all end-stops 54 are actuated simultaneously.

The second group 6 comprises a frame 61, to which the pins 52 are fixed in the holes 62, and which supports the first section 7 for gripping the pallets, for centring the the pallets and/or the layer pads, and the second section 8 for gripping the layer pads.

The first section 7 for gripping the pallets, for centring the pallets and/or the layer pads, comprises two first slidable arms 72, 73 and two second slidable arms 74, 75 arranged substantially orthogonal to each other, i.e. with square cross configuration, two-by-two juxtaposed and mobile in a synchronised manner. The first section 7 further comprises first and second synchronisation means 76, 77, and at least two respective actuator means 78, 79.

The set of slidable arms 72-75 with the first and second synchronisation means 76, 77 constitute a centring device for centring the pallets.

The first arms 72 and 73 are arranged at the top part and comprise respective beams 721, 731 slidable in corresponding sliders 729, 739 that can in turn be fixed to the frame 61; in other words, the beams 721, 731 are slidably supported in a cantilevered manner by the respective sliders 729, 739.

The beams 721, 731 have, each in the external end thereof, at least two gripping elements 722, 732, provided with respective gripping teeth 723, 733, i.e. four gripping teeth 723, 733.

Obviously, the number of gripping teeth 723, 733 may vary as a function of the size and weight of the pallet; the aforementioned gripping teeth 723, 733 perform a gripping function similar to that of the forks of a forklift, given that they are positioned two by two so as to be inserted into the forking space provided for in the pallet.

Thus, the gripping teeth 722, 733 allow to obtain a safe gripping of the pallet, in that based on a shape constraint and not based on the gripping friction, and this allows avoiding the accidental fall of the pallet especially if the profile of the perimeter of the pallet is irregular shaped, the gripping teeth 722, 733 are thus safety means against the accidental falls of the pallet which is gripped by the gripping elements 722, 732.

The second arms 74 and 75 which, in the embodiment illustrated in the figures, are arranged substantially orthogonally beneath the first arms 72 and 73, they also comprise two respective beams 741, 751 slidable in the corresponding sliders 749, 759 which are in turn fixed to the frame 61.

It should be considered that the arrangement above and beneath these elements is purely by way of example and the arrangement of these elements can be exchanged.

The beams 741, 751 have each - in the end - at least two gripping elements 742, 752, but without a gripping tooth due to the fact that they have a centring function only.

All gripping elements and gripping teeth for the pallets are obtained with rounded or bevelled profiles to avoid jamming, especially when it comes to wooden pallets which could have defects or irregularities.

The first synchronisation means 76, which are arranged above the second synchronisation means 77, are provided to obtain the reciprocating and synchronised motion of the first arms 72 and 73, while the second synchronisation means 77 provide for obtaining a reciprocating and synchronised motion of the second arms 74, 75.

Even as concerns these elements, the above and beneath arrangement is purely by way of example and the arrangement of these elements could also be exchanged.

Upon closing the first arms 72 and 73, the two gripping elements 722 and 732 are moved by the same measure and at the same time, thus attaining the centring of the pallet or the layer pad towards the centre of the device 1, along a first direction corresponding to the sliding direction of the first arms 72 and 73.

Upon closing the second arms 74 and 75, the two gripping elements 742 and 752 are moved by the same measure and at the same time, thus attaining the centring of the pallet or the layer pad towards the centre of the device 1, along a second direction, substantially orthogonal to the first direction, corresponding to the sliding direction of the second arms 74 and 75.

Thus, the pallet or the layer pad is perfectly centred according to two directions substantially orthogonal to each other and thus generally centred.

The first and second synchronisation means 76, 77 are independent from each other and obtained in a similar manner.

The first synchronisation means 76 comprise a mechanism with a first rack and pinion 761 fixed to the first beam 721, another first rack and pinion 762 fixed to the other first beam 731 and a first cogwheel 763 - rotatably supported by the frame 61 in an idle manner - which meshes with the two rack-and-pinions 761 and 762.

The second synchronisation means 77 comprise a mechanism with a second rack and pinion 771 fixed to the second beam 741, another second rack and pinion 772 fixed to the other second beam 751 and a second cogwheel 773 - rotatably supported by the frame 61 in an idle manner - which meshes with the two rack-and-pinions 771 and 772.

As can be intuited, thanks to this mechanism, when the first beam 721 moves, the other first beam 731 moves in the opposite direction by an equal measure too, and the same thing occurs for the second beams 741, 751.

The first and second synchronisation means 76, 77 can also be obtained differently, for example with levers and connecting rods or even by means of electronic devices of the linear encoder type and providing each slidable arm with a respective actuator.

The first actuator means 78 comprise a double-acting pneumatic cylinder which actuates both the first beams 721 and 731, one of which directly and the other through the synchronisation means.

Given that the first beams 721 and 731 provide for a shape gripping of the pallet through gripping teeth 722, 733 there also arises the need to be able to block the position of the beams, to provide greater safety for lifting the pallet.

To this end, the double-acting pneumatic cylinder comprises a locking device 781 on the stem, which ensures that the beams 721, 731 do not move upon lifting the pallets.

Also, the second beams 741 and 751 are actuated by the second actuator means 79 which comprise a double-acting pneumatic cylinder, in this case without the locking device given that it is not necessary to guarantee the lifting of the pallet, but just centring according to the sliding direction of the second beams 741 and 751.

The second section 8 for gripping the layer pads comprises suctioning means 81 mounted on a given number of vertical actuators 82, for example four double acting pneumatic cylinders provided with a hollow stem and magnetic end-stop indicating the fully lifted position of the plunger of the pneumatic cylinder.

The suctioning means comprise bellows-like suction cups 81 actuated in suctioning through vacuum generators 83 arranged on the upper part of the pneumatic cylinders 82 and communicating with the suction cups 81 through the hollow stem of the pneumatic cylinders 82.

The pneumatic cylinders 82 are actuated in ascent or in descent through a pneumatic circuit provided with check valves, controlled by the pressure on the descent duct, on the ascent duct, so as to maintain the raised position of the suction cup when gripping the layer pads.

It should be observed that in the device 1 according to the invention, only pneumatic actuators were used due to the fact that they are usually lighter and less expensive as compared to other types of actuators. However, the device 1 could equally work even with other types of actuators, for example actuators of the electric or oil hydraulic type.

Described below are some operating cycles of the device 1.

According to a first operating cycle which serves for gripping the pallet, the device 1 for gripping and handling is positioned with all four arms 72, 73, 74, 75 open directly over the stack of empty pallets 2 to be picked up.

The device 1 descends until it rests on the top part of the stack, obtaining - from the group 5 - an operation as probe means, detecting the vertical position of the pallet 2 and being free from possible height errors on the pallets.

Once the probe means have detected the top part of the stack of pallets 2, the device 1 lifts by a pre-established height, depending on the type and size of the pallets, to allow the gripping teeth 723, 733 to be inserted into the forking space of the pallet.

So, the first arms 72 and 73 are actuated to close, and the first synchronisation means 76 allow the pallets to be centred along a first direction corresponding to the sliding direction of the first arms 72 and 73.

The teeth 723, 733 guarantee a safe gripping of the pallet even should the vertical walls of the gripping elements 722, 732 not be fully secured against the sides of the pallet. The entire device 1 lifts by an amount sufficient to allow to detach the pallet to be handled from the stack of pallets.

The first arms 72 and 73 with the relative teeth 723, 733 are moved to "neutral", i.e. the closing force id removed and the pallet is free to be able to move laterally. However, the locking device 781 of the stem of the respective actuator 78 is also actuated so as to maintain the shape gripping on the pallet.

Due to the weight thereof, the pallet will descend and rest on the upper horizontal wall of the four teeth 723, 733 of the gripping mechanism.

Should, for any reason, the pallet not descend due to the fact that it is stuck somewhere, this does not represent a problem at this stage.

Thus, the second arms 74 and 75 are also actuated, which move the two gripping elements 742 and 752 by the same measure and at the same time, thus attaining the centring of the pallet along the second direction, substantially orthogonal to the first direction, corresponding to the sliding direction of the second arms 74 and 75.

Due to this movement, even the potentially stuck pallet descends and rests against the upper horizontal walls of the gripping teeth 723, 733, thus the pallet encounters a horizontal surface on which it can slide according to the single degree of freedom allowed thereto.

The pallet 2 is thus deposited in the position in which the load of the products to be palletised is formed, for example even above another previously palletised load.

The result of this first operating cycle is thus having a pallet centred with respect to the centre of the gripping device 1 and thus allowing to move on to a subsequent operating step.

Should the pallet to be picked up from the stack of pallets be displaced beyond the maximum tolerances that can be managed by the device 1, the group 5 with the end-stop 54 detect an unusual situation, i.e. only a few end-stops 54 are actuated, and thus the operating cycle cannot be completed.

According to a second operating cycle which serves for picking up the layer pads, the gripping and handling device 1 is positioned with all four arms 72, 73, 74, 75 open directly over the stack of layer pads 3.

It should be observed that the warehouse of the layer pads 3 does not require any accessory, in particular there is no need for brushes, centring elements, etcetera. The device 1 descends until it rests on the top part of the stack of layer pads, obtaining - from the group 5 - the operation as probe means capable of detecting the position of the top part of the stack of layer pads 3.

Thus, the device 1 lifts by a pre-established height which allows the gripping elements 722, 732, 742 and 752 to centre a given number of layer pads 3 arranged at the topmost part.

When the first arms 72 and 73 are actuated to close, the first synchronisation means 76 allow a given number of layer pads 3 to be centred along a first direction corresponding to the sliding direction of the first arms 72 and 73.

Thus, the second arms 74 and 75 are also actuated, which move the two gripping elements 742 and 752 by the same measure and at the same time, thus attaining the centring of a given number of layer pads 3 along the second substantially orthogonal direction, corresponding to the sliding direction of the second arms 74 and 75.

At this point, a given number of layer pads 3 is fully centred with respect to the centre of the device 1.

Then, the descent is actuated of the suction cups 81, which rest against the stack of layer pads 3 and the vacuum generators 83 are actuated so as to allow the topmost layer pad 3 to be attached to the suction cups 81.

All the first arms 72, 73 and the second arms 74, 75 are moved to "neutral", i.e. the closing force is removed maintaining the achieved position.

Thus, the layer pads underlying the one to be handled, no longer having any external force besides the one of the possible low friction with the gripping elements, which are rounded and bevelled, can slide with respect to the gripping elements 722, 732, 742 and 752, which perform the guiding function only in this case.

The device 1 then lifts by a pre-established height, to allow a first detachment of the last layer pad 3 from the stack, the lifting height being large enough to allow a first detachment of the layer pad, but the terminal part towards the bottom of the gripping elements 722, 732, 742 and 752 still constitutes an enclosure for containing and guiding the layer pads immediately beneath the one to be handled, so as to prevent - during the detachment of the layer pad on the top part of the stack - the layer pad immediately beneath from flying out of the warehouse.

All the first arms 72, 73 and the second arms 74, 75 are then opened fully. The ascent of the suction cups 81 and the descent immediately thereafter is actuated as the last handling safety action.

Not having a central support, the layer pad 3 will bend partially ensuring the detachment of the possible layer pad, or the possible layer pads, attached to the layer pad at the top part of the stack and a safe pick up of a single layer pad 3 to be handled.

Thus, there is a single layer pad 3, centred with respect to the centre of the device 1 and firmly gripped by means of the suction cups 81 and thus allowing to move on to the next step.

Should the stack of layer pads be displaced beyond the maximum manageable tolerances with respect to the centre of the device 1, the group 5 with the end-stops 54 detects an unusual situation, i.e. only a few end-stops 54 are actuated, and thus he operating cycle cannot be completed.

Following is the description of the combined operating cycle for picking up a layer pad and a pallet centred with respect to each other and with respect to the device 1.

Firstly, the operating cycle is carried out for picking up a layer pad 3. Thus, there is a single layer pad 3, centred with respect to the centre of the device 1 and firmly gripped by means of the suction cups 81, then all four arms 72, 73, 74, 75 are opened and thus all pneumatic cylinders 82 carrying the suction cups 81 are brought to the lowest height.

The device 1 with the layer pad 3 attached to the suction cups 81 is carried above the stack of pallets 2. Should the stack of pallets be displaced beyond the maximum manageable tolerances with respect to the centre of the device 1, the cycle is stopped just like in the case of the previous cycles.

On the other hand, should the stack of pallets 2 be positioned within the tolerances provided for, the device 1 starts to descend towards stack of pallets, and at the same time the pneumatic cylinders 82 are moved to "neutral" position, i.e. the downward thrust force is removed.

Thus, due to the downward movement of the entire device 1, the pneumatic cylinders 82 will be thrust upward, until the probe means of the device 1 detect the top part of the stack of pallets.

The vertical height of the suction cups 81 is thus maintained by the pneumatic circuit for actuating the cylinders 82, a circuit which, as mentioned, provides for check valves on the ascent ducts of the cylinders 82, thus the suction cups 81 with the layer pad 3 attached cannot descend any more.

This is done so as to allow the pallet to be centred without having the layer pad at contact, and thus in order to avoid possible problems related to the displacement of the layer pad due to the possible sliding between the layer pad and pallet. Then, the previously described pallet gripping operating cycle is carried out. Once the cycle for the pallet is carried out, the layer pad 3 is centred and situated beneath the pallet 2, which is also centred. Upon providing the lowering command to the cylinders 82 of the suction cups 81, the layer pad 3 rests above the pallet 2 and the device 1 can thus move on to a subsequent operation.

It has thus been observed that the invention attains the pre-set objectives.

The device 1 according to the present invention allows reducing the time that elapses during the operations for changing the pallets and inserting the layer pad when forming a load on a pallet, to the minimum.

The device 1 has the advantage of being able to deposit the pallets and the layer pads always in the same position irrespective of the position and method for loading pallets and layer pads, the only restriction lying in the maximum opening of the arms of the device which allows the latter to be able to descend on the stacks of the pallets or the layer pads.

Furthermore, the device 1 is also capable of positioning a layer pad centred with respect to the movement mechanism above a pallet centred in turn with respect to the movement mechanism without having to necessarily rest neither the pallet nor the layer pad on a plane, thus leading to considerably saving time in the general cycle for forming a load on a pallet.

## Claims

1. Gripping and handling device (1) for pallets (2) and/or for layer pads (3), provided with an attachment flange (4) for a multiple axis movement mechanism, for example a robot of anthropomorphic type or Cartesian type, comprising a group (6) for the gripping the pallet and/or of the layer pad with a first section (7) for gripping the pallets and a second section (8) for gripping the layer pads and a control unit (9) for supervising and controlling the functions of the device (1) itself, **characterized in that** it comprises:
a first anti-collision safety group (5), fixed to the attachment flange (4), with means for detecting the vertical position of the pallet and/or of the layer pad to be picked up, wherein said first group (5) comprises elastic elements (53), which maintain the second group (6) pressed in moving away at a predefined distance "d" from the first group (5), and at least three end-stops (54), which detect reductions of the distance "d", arranged on the plate (51) at the vertices of a triangle in proximity to the connections means (51,52,61,62) or elastic elements (53), and wherein the control unit (9) is configured to stop the displacement of the gripping and handling device (1) if only some of the end-stops (54) detect the reduction of the distance "d" in the case of faulty positioning of some pallet or layer pad in the stacks of pallets or layer pads, or a hazardous situation; and **in that**
said group (6) for the gripping the pallet and/or of the layer pad is a second group connected to the first group (5), and said group (6) is provided with a centering device (72-77, 722, 732, 742, 752) for centering the pallets and/or the layer pads, and with safety means (723, 733) against the accidental falls of the pallet.

2. Device according to claim 1, wherein said first group (5) comprises a support plate (51) to which the attachment flange (4) is fixed, the control unit (9) and connection means (51, 52, 61, 62) for connecting the first group (5) to the second group (6), said second group (6) comprising a frame (61) with at least one hole (62), said connection means comprising at least one pin (52) with an upper end slidable within the hole of the support plate (51) and with a lower end connected to the frame (61) in the at least one hole (62), so as to maintaining the possibility of a certain movement between the two groups (5, 6), according to a substantially vertical axis Z.

3. Device according to the preceding claim, wherein said end stops (54) are four, or five, or six, etcetera of these, arranged at the vertices of respective regular or irregular polygons: square, rectangle, pentagon, hexagon, etcetera.

4. Device according to one of the preceding claims, wherein second group (6) comprises a frame (61) which supports said first gripping section (7) for the pallets (2), for centering the pallets and/or the layer pads, comprising two first slidable arms (72, 73) and two second slidable arms (74, 75) arranged substantially orthogonal to each other, i.e. with square cross configuration, two-by-two opposite and movable in a synchronized manner, first and second synchronization means (76, 77), and at least two respective actuator means (78, 79) respectively for the first and the second slidable arms, wherein said first slidable arms (72,73) comprise respective first beams (721,731) which are projectingly supported in a slidable manner by respective first sliding blocks (729,739), which are in turn fixed to the frame (61), and wherein said second slidable arms (74,75) comprise respective second beams (741,751) which are projectingly supported by respective second sliding blocks (749,759), which are in turn fixed to the frame (61) and wherein said first synchronization means (76) comprise a mechanism with a first rack (761) fixed to the first beam (721), another first rack (762) fixed to the other first beam (731) and a first toothed wheel (763), rotatably supported by the frame (61) in an idle manner, which engages with the two first racks (761,762), and said second synchronization means (77) comprise a mechanism with a second rack (771) fixed to the second beam (741), another second rack (772) fixed to the other first beam (751) and a second toothed wheel (773), rotatably supported by the frame (61) in an idle manner, which engages with the two second racks (771,772).

5. Device according to the preceding claim, wherein said two first slidable arms (72, 73) comprise, in the external end thereof, at least two gripping elements (722, 732), provided with respective gripping teeth (723, 733), i.e. four gripping teeth (723, 733), and comprising first actuator means (78) with a double-acting pneumatic cylinder which actuates both said first slidable arms (72, 73), said pneumatic cylinder being provided with a locking device (781).

6. Device according to one of the claims 4-5, wherein said two second slidable arms (74, 75) comprise, in the external end thereof, at least two gripping elements (742, 752), and comprising second actuator means (78) with a double-acting pneumatic cylinder which actuates both said second slidable arms (72, 73).

7. Device according to one of the preceding claims, wherein said second section (8) for gripping layer pads (3) comprises suction means (81) mounted on a certain number of vertical actuators, for example four double-acting pneumatic cylinders (82).

8. Device according to the preceding claim, wherein when said vertical actuators are pneumatic cylinders, said pneumatic cylinders (82) are actuated upward or downward by means of a pneumatic circuit provided with check valves on the duct for the upward movement, the check valves being driven by the pressure on the duct for the downward movement.

9. Method for gripping a pallet (2) which uses a device (1) according to one of the preceding claims from 5 to 8, **characterized in that** it comprises the steps of:
opening the second group (6) to the maximum opening, for the gripping, centering of the pallet and/or of the layer pad;
abutting said device (1) against a stack of pallets (2), obtaining from the first group (5) the detection of the vertical position of the highest pallet (2);
lifting the device (1) for a pre-established height, based on the type and size of the pallet, in order to allow gripping teeth (723, 733) of the second group (6) to be inserted within the forking space of the pallet itself;
actuating the closing of the first arms (72, 73) of the second group (6), allowing - by means of the first synchronization means (76) - the pallet (2) to be centered along a first direction corresponding to the sliding direction of the first arms (72, 73);
removing the closing force of the first arms (72, 73) and fixing the position reached by means of a locking device (781);
actuating the closing of the second arms (74, 75) of the second group (6), allowing - by means of the second synchronization means (77) - the pallet (2) to be centered along a second direction, substantially orthogonal to said first direction and corresponding to the sliding direction of the second arms (74, 75); and
depositing said pallet (2) in the position wherein the loading of the products to be palletized must be formed.

10. Method for gripping a layer pad (3) which uses a device (1) according to one of the preceding claims from 5 to 8, **characterized in that** it comprises the steps of:
opening the second group (6) to the maximum opening, for the gripping, centering of the pallet and/or of the layer pad;
abutting said device (1) against a stack of layer pads, obtaining from the first group (5) the detection of the vertical position of the highest layer pad (3);
actuating the closing of the first arms (72, 73) and second arms (74, 75) of the second group (6), allowing - by means of the first and second synchronization means (76, 77) - the highest layer pads (3) in the stack to be centered along a first direction corresponding to the sliding direction of the first arms (72, 73) and along a second direction substantially orthogonal to the first and corresponding to the sliding direction of the second arms (74, 75);
removing the closing force of the first arms (72, 73) and of the second arms (74, 75) and maintaining the attained position;
lowering suction means (81) such that they abut against the stack of layer pads (3) and actuating vacuum generators (83) so as to allow the highest layer pad (3) in the stack to be attached to the suction means (81);
lifting the device (1) for a pre-established height in order to carry out a separation of the layer pad (3), maintaining the highest layer pads in the stack centered; and
actuating the upward movement of the suction means (81) and immediately afterward the downward movement, in order to facilitate the separation of the possible layer pad or possible layer pads attached to the highest layer pad (3) in the stack, and obtaining a safe pick-up only of the highest layer pad (3) to be handled.

11. Method for gripping a layer pad (3) according to the preceding claim followed by the method for gripping a pallet (2) according to claim 9.

12. Method for gripping a layer pad (3) according to the preceding claim, wherein between the steps for gripping a layer pad (3) and the steps for gripping a pallet (2), the following steps are provided:
removing the downward thrust force of the pneumatic cylinders (82), to which the suction means (81) which maintain the layer pad (3) are fixed;
moving the entire device (1) downward, said pneumatic cylinders (82) will be thrust upward, until the probe means of the device (1) detect the top of the pallet stack (2); and
maintaining the vertical height of the suction means (81) by blocking the pneumatic actuation circuit for the cylinders (82) through check valves which are situated on the ducts for the upward movement of the cylinders (82) themselves, in order to not have the layer pad (3) in contact with the pallet (2) and to prevent possible problems of movement of the layer pad due to the possible sliding between the layer pad and the pallet.

## Patentansprüche

1. Greif- und Handhabungsvorrichtung (1) für Paletten (2) und/oder für Zwischenlagen (3), die mit einem Befestigungsflansch (4) für einen mehrachsigen Bewegungsmechanismus, beispielsweise einen Roboter vom anthropomorphen Typ oder vom kartesischen Typ, versehen ist, umfassend eine Gruppe (6) zum Greifen der Palette und/oder der Zwischenlage mit einem ersten Abschnitt (7) zum Greifen der Paletten und einem zweiten Abschnitt (8) zum Greifen der Zwischenlagen und eine Steuereinheit (9) zum Überwachen und Steuern der Funktionen der Vorrichtung (1) selbst, **dadurch gekennzeichnet, dass** sie umfasst:
eine erste Antikollisions-Sicherheitsgruppe (5), befestigt an dem Befestigungsflansch (4), mit Mitteln zum Erfassen der vertikalen Position der aufzunehmenden Palette und/oder der Zwischenlage, worin die besagte erste Gruppe (5) elastische Elemente (53), die die zweite Gruppe (6) in einem vordefinierten Abstand "d" von der ersten Gruppe (5) wegbewegt gedrückt halten, und mindestens drei Endanschläge (54), die die Reduzierungen des Abstands "d", angeordnet auf der Platte (51) an den Scheitelpunkten eines Dreiecks in der Nähe der Verbindungsmittel (51, 52, 61, 62), erfassen, oder elastische Elemente (53) umfasst, und worin die Steuereinheit (9) konfiguriert ist, um die Verschiebung der Greif- und Handhabungsvorrichtung (1) zu stoppen, wenn nur einige der Endanschläge (54) die Reduzierung des Abstands "d" im Fall einer Fehlpositionierung irgendeiner Palette oder Zwischenlage in den Stapeln von Paletten oder Zwischenlagen oder eine Gefahrensituation erfassen; und
dadurch, dass
die besagte Gruppe (6) zum Greifen der Palette und/oder der Zwischenlage eine zweite Gruppe ist, die mit der ersten Gruppe (5) verbunden ist, und die besagte Gruppe (6) mit einer Zentriervorrichtung (72-77, 722, 732, 742, 752) zum Zentrieren der Paletten und/oder der Zwischenlagen und mit Sicherheitsmitteln (723, 733) gegen den unbeabsichtigten Fall der Palette versehen ist.

2. Vorrichtung nach Anspruch 1, worin die besagte erste Gruppe (5) eine Tragplatte (51), an der der Befestigungsflansch (4) befestigt ist, die Steuereinheit (9) und Verbindungsmittel (51, 52, 61, 62) zum Verbinden der ersten Gruppe (5) mit der zweiten Gruppe (6) umfasst, wobei die besagte zweite Gruppe (6) einen Rahmen (61) mit mindestens einem Loch (62) umfasst, wobei die besagten Verbindungsmittel mindestens einen Stift (52) mit einem oberen Ende, das in dem Loch der Tragplatte (51) verschiebbar ist, und mit einem unteren Ende, das mit dem Rahmen (61) in dem mindestens einen Loch (62) verbunden ist, umfassen, um die Möglichkeit einer bestimmten Bewegung zwischen den zwei Gruppen (5, 6) gemäß einer im Wesentlichen vertikalen Achse Z beizubehalten.

3. Vorrichtung nach dem vorangegangenen Anspruch, worin die besagten Endanschläge (54) vier oder fünf oder sechs usw. von diesen sind, die an den Scheitelpunkten jeweiliger regelmäßiger oder unregelmäßiger Vielecke angeordnet sind: Viereck, Rechteck, Fünfeck, Sechseck usw.

4. Vorrichtung nach einem der vorangegangenen Ansprüche, worin die zweite Gruppe (6) einen Rahmen (61) umfasst, der den besagten ersten Greifabschnitt (7) für die Paletten (2) zum Zentrieren der Paletten und/oder der Zwischenlagen trägt, umfassend zwei erste verschiebbare Arme (72, 73) und zwei zweite verschiebbare Arme (74, 75), die im Wesentlichen orthogonal zueinander angeordnet sind, d.h. mit quadratischer Kreuzkonfiguration zwei-zu-zwei gegenüberliegend und in einer synchronisierten Weise bewegbare erste und zweite Synchronisationsmittel (76, 77) und mindestens zwei jeweilige Betätigungsmittel (78, 79) jeweils für die ersten und die zweiten verschiebbaren Arme, worin die besagten ersten verschiebbaren Arme (72, 73) jeweilige erste Träger (721, 731) umfassen, die vorspringend in einer verschiebbaren Weise durch jeweilige erste Gleitblöcke (729, 739) gestützt werden, die wiederum an dem Rahmen (61) befestigt sind, und worin die besagten zweiten verschiebbaren Arme (74, 75) jeweilige zweite Träger (741, 751) umfassen, die vorspringend durch jeweilige zweite Gleitblöcke (749, 759) gestützt werden, die wiederum an dem Rahmen (61) befestigt sind, und worin die besagten ersten Synchronisationsmittel (76) einen Mechanismus mit einer ersten Zahnstange (761), die an dem ersten Träger (721) befestigt ist, einer weiteren ersten Zahnstange (762), die an dem anderen ersten Träger (731) befestigt ist, und einem ersten Zahnrad (763), drehbar gestützt von dem Rahmen (61) in einer leerlaufenden Weise, das mit den beiden ersten Zahnstangen (761, 762) in Eingriff steht, umfassen und die besagten zweiten Synchronisationsmittel (77) einen Mechanismus mit einer zweiten Zahnstange (771), die an dem zweiten Träger (741) befestigt ist, einer weiteren zweiten Zahnstange (772), die an dem anderen ersten Träger (751) befestigt ist, und einem zweiten Zahnrad (773), drehbar gestützt von dem Rahmen (61) in einer leerlaufenden Weise, das mit den zwei zweiten Zahnstangen (771, 772) in Eingriff steht, umfassen.

5. Vorrichtung nach dem vorangegangenen Anspruch, worin die besagten zwei ersten verschiebbaren Arme (72, 73) an ihrem äußeren Ende mindestens zwei Greifelemente (722, 732) umfassen, die mit jeweiligen Greifzähnen (723, 733), d.h. vier Greifzähnen (723, 733), versehen sind, und umfassend erste Betätigungsmittel (78) mit einem doppeltwirkenden Pneumatikzylinder, der die beiden besagten ersten verschiebbaren Arme (72, 73) betätigt, wobei der besagte Pneumatikzylinder mit einer Verriegelungsvorrichtung (781) versehen ist.

6. Vorrichtung nach einem der Ansprüche 4-5, worin die besagten zwei zweiten verschiebbaren Arme (74, 75) an ihrem äußeren Ende mindestens zwei Greifelemente (742, 752) aufweisen und umfassend zweite Betätigungsmittel (78) mit einem doppeltwirkenden Pneumatikzylinder, der die beiden besagten zweiten verschiebbaren Arme (72, 73) betätigt.

7. Vorrichtung nach einem der vorangegangenen Ansprüche, worin der besagte zweite Abschnitt (8) zum Greifen von Zwischenlagen (3) Saugmittel (81) umfasst , die auf einer bestimmten Anzahl von vertikalen Aktuatoren, beispielsweise vier doppeltwirkende Pneumatikzylinder (82), montiert sind.

8. Vorrichtung nach dem vorangegangenen Anspruch, worin, wenn die besagten vertikalen Aktuatoren Pneumatikzylinder sind, die besagten Pneumatikzylinder (82) aufwärts oder abwärts mittels eines Pneumatikkreises mit Rückschlagventilen an der Leitung für die Aufwärtsbewegung betätigt werden, wobei die Rückschlagventile durch den Druck an der Leitung für die Abwärtsbewegung betrieben werden.

9. Verfahren zum Greifen einer Palette (2), das eine Vorrichtung (1) nach einem der vorangegangenen Ansprüche 5 bis 8 verwendet, **dadurch gekennzeichnet, dass** es die Schritte umfasst des:
Öffnens der zweiten Gruppe (6) bis zur maximalen Öffnung für das Greifen, Zentrieren der Palette und/oder der Zwischenlage;
Anlegens der besagten Vorrichtung (1) gegen einen Stapel von Paletten (2), wobei von der ersten Gruppe (5) die Erfassung der vertikalen Position der höchsten Palette (2) erhalten wird;
Anhebens der Vorrichtung (1) um eine vorab festgelegte Höhe, die auf dem Typ und der Größe der Palette basiert,
damit die Greifzähne (723, 733) der zweiten Gruppe (6) in den Gabelraum der Palette selbst eingeführt werden können;
Betätigens des Schließens der ersten Arme (72, 73) der zweiten Gruppe (6), das - mittels der ersten Synchronisationsmittel (76) - das Zentrieren der Palette (2) entlang einer ersten Richtung, die der Gleitrichtung der ersten Arme (72, 73) entspricht, ermöglicht;
Wegnehmens der Schließkraft der ersten Arme (72, 73) und
des Fixierens der mittels einer Verriegelungsvorrichtung (781) erreichten Position;
Betätigens des Schließens der zweiten Arme (74, 75) der zweiten Gruppe (6), das - mittels der zweiten Synchronisationsmittel (77) - das Zentrieren der Palette (2) entlang einer zweiten Richtung, die im Wesentlichen orthogonal zu der besagten ersten Richtung ist und der Gleitrichtung der zweiten Arme (74, 75) entspricht, ermöglicht; und
des Ablegens der Palette (2) in der Position, worin die Ladung der zu palettierenden Produkte gebildet werden muss.

10. Verfahren zum Greifen einer Zwischenlage (3), das eine Vorrichtung (1) nach einem der vorangegangenen Ansprüche 5 bis 8 verwendet, **dadurch gekennzeichnet, dass** es die Schritte umfasst des:
Öffnens der zweiten Gruppe (6) bis zur maximalen Öffnung für das Greifen, Zentrieren der Palette und/oder der Zwischenlage;
Anlegens der besagten Vorrichtung (1) gegen einen Stapel von Zwischenlagen, wobei von der ersten Gruppe (5) die Erfassung der vertikalen Position der höchsten Zwischenlage (3) erhalten wird;
Betätigens des Schließens der ersten Arme (72, 73) und zweiten Arme (74, 75) der zweiten Gruppe (6), das - mittels der ersten und zweiten Synchronisationsmittel (76, 77) - das Zentrieren der höchsten Zwischenlagen (3) in dem Stapel entlang einer ersten Richtung, die der Gleitrichtung der ersten Arme (72 73) entspricht, und entlang einer zweiten Richtung, die im Wesentlichen orthogonal zu der ersten ist und der Gleitrichtung der zweiten Arme (74, 75) entspricht, ermöglicht;
Wegnehmens der Schließkraft der ersten Arme (72, 73) und der zweiten Arme (74, 75) und des Beibehaltens der erreichten Position;
Absenkens von Saugmitteln (81), sodass sie gegen den Stapel von Zwischenlagen (3) anliegen, und des Betätigens von Vakuumerzeugern (83), sodass die höchste Zwischenlage (3) im Stapel an den Saugmitteln (81) befestigt werden kann;
Anhebens der Vorrichtung (1) um eine vorab festgelegte Höhe, um eine Trennung der Zwischenlage (3) auszuführen, wobei die höchsten Zwischenlagen im Stapel zentriert gehalten werden; und
des Betätigens der Aufwärtsbewegung der Saugmittel (81) und unmittelbar danach der Abwärtsbewegung, um die Trennung der möglichen Zwischenlage oder der möglichen Zwischenlagen, die an der höchsten Zwischenlage (3) im Stapel befestigt sind, zu erleichtern und des Erhaltens einer sicheren Aufnahme nur der höchsten zu handhabenden Zwischenlage (3).

11. Verfahren zum Greifen einer Zwischenlage (3) nach dem vorangegangenen Anspruch, gefolgt von dem Verfahren zum Greifen einer Palette (2) nach Anspruch 9.

12. Verfahren zum Greifen einer Zwischenlage (3) nach dem vorangegangenen Anspruch, worin zwischen den Schritten zum Greifen einer Zwischenlage (3) und den Schritten zum Greifen einer Palette (2) die folgenden Schritte vorgesehen sind:
des Wegnehmens der abwärts gerichteten Schubkraft der Pneumatikzylinder (82), an denen die Saugmittel (81), die die Zwischenlage (3) halten, befestigt sind;
des Abwärtsbewegens der gesamten Vorrichtung (1), wobei die besagten Pneumatikzylinder (82) nach oben geschoben werden, bis die Sondenmittel der Vorrichtung (1) die Oberseite des Palettenstapels (2) erfassen; und
des Beibehaltens der vertikalen Höhe der Saugmittel (81) durch Blockieren des pneumatischen Betätigungskreises für die Zylinder (82) durch Rückschlagventile, die an den Leitungen für die Aufwärtsbewegung der Zylinder (82) selbst angeordnet sind, um die Zwischenlage (3) nicht in Kontakt mit der Palette (2) zu haben und um mögliche Probleme der Bewegung der Zwischenlage durch mögliches Gleiten zwischen der Zwischenlage und der Palette zu vermeiden.

## Revendications

1. Dispositif de préhension et de manutention (1) pour palettes (2) et/ou pour intercalaires (3), doté d'une bride de fixation (4) pour un mécanisme de déplacement à axes multiples, par exemple un robot de type anthropomorphique ou de type cartésien, comprenant un groupe (6) pour la préhension de la palette et/ou de l'intercalaire avec une première section (7) pour la préhension des palettes et une deuxième section (8) pour la préhension des intercalaires et une unité de commande (9) pour superviser et contrôler les fonctions du dispositif (1) même, **caractérisé en ce qu'**il comprend :
un premier groupe de sécurité anticollision (5), fixé à la bride de fixation (4), avec des moyens pour détecter la position verticale de la palette et/ou de l'intercalaire qui doivent être prélevés, dans lequel ledit premier groupe (5) comprend des éléments élastiques (53), qui maintiennent le deuxième groupe (6) enfoncé en s'éloignant à une distance « d » prédéfinie du premier groupe (5), et au moins trois butées (54), qui détectent les réductions de la distance « d », disposées sur la plaque (51) aux sommets d'un triangle à proximité des moyens de raccordement (51, 52, 61, 62) ou des éléments élastiques (53), et dans lequel l'unité de commande (9) est configurée pour arrêter le déplacement du dispositif de préhension et de manutention (1) si seulement une partie des butées (54) détectent la réduction de la distance « d » en cas de positionnement erroné d'une palette ou d'un intercalaire dans les piles de palettes ou d'intercalaires, ou une situation dangereuse ;
et **en ce que**
ledit groupe (6) pour la préhension de la palette et/ou de l'intercalaire est un deuxième groupe relié au premier groupe (5), et ledit groupe (6) est doté d'un dispositif de centrage (72-77, 722, 732, 742, 752) pour centrer les palettes et/ou les intercalaires, et de moyens de sécurité (723, 733) contre les chutes accidentelles de la palette.

2. Dispositif selon la revendication 1, dans lequel ledit premier groupe (5) comprend une plaque de support (51) à laquelle la bride de fixation (4) est fixée, l'unité de commande (9) et les moyens de raccordement (51, 52, 61, 62) pour raccorder le premier groupe (5) au deuxième groupe (6), ledit deuxième groupe (6) comprenant un bâti (61) avec au moins un orifice (62), lesdits moyens de raccordement comprenant au moins un axe (52) dont l'extrémité supérieure peut coulisser dans l'orifice de la plaque de support (51) et l'extrémité inférieure est raccordée au bâti (61) dans le au moins un orifice (62) de façon à permettre un certain mouvement entre les deux groupes (5, 6), selon un axe Z sensiblement vertical.

3. Dispositif selon la revendication précédente, dans lequel lesdites butées (54) sont au nombre de quatre, ou cinq ou six, etc., disposées aux sommets de polygones réguliers ou irréguliers respectifs : carré, rectangulaire, pentagonal, hexagonal, etc.

4. Dispositif selon l'une des revendications précédentes, dans lequel le deuxième groupe (6) comprend un bâti (61) qui supporte ladite première section de préhension (7) pour les palettes (2), pour centrer les palettes et/ou les intercalaires, comprenant deux premiers bras coulissants (72, 73) et deux deuxièmes bras coulissants (74, 75) disposés sensiblement orthogonalement l'un par rapport à l'autre, c.à.d. en configuration de croix, deux par deux opposés et mobiles de manière synchronisée, les premiers et les deuxièmes moyens de synchronisation (76, 77), et au moins deux actionneurs (78, 79) respectivement pour les premiers et les deuxièmes bras coulissants, dans lequel lesdits premiers bras coulissants (72, 73) comprennent des premières poutres (721, 731) respectives qui sont supportées de manière saillante et coulissante par des premiers blocs coulissants (729, 739), respectifs qui sont à leur tour fixés au bâti (61), et dans lequel lesdits deuxièmes bras coulissants (74, 75) comprennent des deuxièmes poutres (741, 751) respectives qui sont supportées de manière saillante par des deuxièmes blocs coulissants (749, 759), respectifs qui sont à leur tour fixés au bâti (61) et dans lequel lesdits premiers moyens de synchronisation (76) comprennent un mécanisme avec une première crémaillère (761) fixée à la première poutre (721), une autre première crémaillère (762) fixée à l'autre première poutre (731) et une première roue dentée (763), supportée de manière rotative par le bâti (61) de façon inactive en accouplement avec les deux premières crémaillères (761, 762), et lesdits deuxièmes moyens de synchronisation (77) comprennent un mécanisme avec une deuxième crémaillère (771) fixée à la deuxième poutre (741), une autre deuxième crémaillère (772) fixée à l'autre première poutre (751) et une deuxième roue dentée (773), supportée de manière rotative par le bâti (61) de façon inactive en accouplement avec les deux deuxièmes crémaillères (771, 772).

5. Dispositif selon la revendication précédente, dans lequel lesdits deux premiers bras coulissants (72, 73) comprennent, à leur extrémité extérieure, au moins deux éléments de préhension (722, 732) dotés de dents de préhension (723, 733) respectives, c.à.d. quatre dents de préhension (723, 733), et comprenant des premiers actionneurs (78) avec un vérin pneumatique à double action qui actionne lesdits premiers bras coulissants (72, 73), ledit vérin pneumatique étant doté d'un dispositif de verrouillage (781).

6. Dispositif selon l'une des revendications 4 et 5, dans lequel lesdits deux deuxièmes bras coulissants (74, 75) comprennent, à leur extrémité extérieure, au moins deux éléments de préhension (742, 752), et des deuxièmes actionneurs (78) avec un vérin pneumatique à double action qui actionne lesdits deux deuxièmes bras coulissants (72, 73) .

7. Dispositif selon l'une des revendications précédentes, dans lequel ladite deuxième section (8) pour la préhension des intercalaires (3) comprend des moyens d'aspiration (81) montés sur un certain nombre d'actionneurs verticaux, par exemple quatre vérins pneumatiques à double action (82).

8. Dispositif selon la revendication précédente, dans lequel lorsque lesdits actionneurs verticaux sont des vérins pneumatiques, lesdits vérins pneumatiques (82) sont actionnés vers le haut ou vers le bas au moyen d'un circuit pneumatique doté de clapets antiretour sur le conduit pour le mouvement vers le haut, les clapets antiretour étant actionnés par la pression sur le conduit pour le mouvement vers le bas.

9. Procédé pour la préhension d'une palette (2) qui utilise un dispositif (1) selon l'une des revendications 5 à 8 précédentes, **caractérisé en ce qu'**il comprend les étapes suivantes :
ouverture du deuxième groupe (6) à l'ouverture maximale, pour la préhension, le centrage de la palette et/ou de l'intercalaire ;
mise en butée dudit dispositif (1) contre une pile de palettes (2), afin d'obtenir du premier groupe (5) la détection de la position verticale de la palette (2) la plus haute ;
levage du dispositif (1) à une hauteur prédéterminée, selon le type et la taille de la palette, afin de permettre aux dents de préhension (723, 733) du deuxième groupe (6) d'être insérées dans l'espace de fourche de la palette ;
actionnement de la fermeture des premiers bras (72, 73) du deuxième groupe (6) pour permettre - au moyen des premiers moyens de synchronisation (76) - le centrage de la palette (2) le long d'une première direction correspondant à la direction de coulissement des premiers bras (72, 73) ;
retrait de la force de fermeture des premiers bras (72, 73) et fixation de la position atteinte au moyen d'un dispositif de verrouillage (781) ;
actionnement de la fermeture des deuxièmes bras (74, 75) du deuxième groupe (6) pour permettre - au moyen des deuxièmes moyens de synchronisation (77) - le centrage de la palette (2) le long d'une deuxième direction sensiblement orthogonale à ladite première direction et correspondant à la direction de coulissement des deuxièmes bras (74, 75) ; et
dépôt de ladite palette (2) dans la position dans laquelle le chargement des produits à palettiser doit être formé.

10. Procédé pour la préhension d'un intercalaire (3) qui utilise un dispositif (1) selon l'une des revendications 5 à 8 précédentes, **caractérisé en ce qu'**il comprend les étapes suivantes :
ouverture du deuxième groupe (6) à l'ouverture maximale, pour la préhension, le centrage de la palette et/ou de l'intercalaire ;
mise en butée dudit dispositif (1) contre une pile d'intercalaires afin d'obtenir du premier groupe (5) la détection de la position verticale de l'intercalaire (3) le plus haut ;
actionnement de la fermeture des premiers bras (72, 73) et des deuxièmes bras (74, 75) du deuxième groupe (6), pour permettre - au moyen des premiers et des deuxièmes moyens de synchronisation (76, 77) - le centrage des intercalaires (3) les plus hauts dans la pile le long d'une première direction correspondant à la direction de coulissement des premiers bras (72, 73) et le long d'une deuxième direction sensiblement orthogonale à la première et correspondant à la direction de coulissement des deuxièmes bras (74, 75) ;
retrait de la force de fermeture des premiers bras (72, 73) et des deuxièmes bras (74, 75) et maintien de la position atteinte ;
abaissement des moyens d'aspiration (81) de telle manière qu'ils entrent en butée contre la pile d'intercalaires (3) et actionnement des générateurs de vide (83) pour permettre à l'intercalaire (3) le plus élevé dans la pile d'être fixé aux moyens d'aspiration (81) ;
levage du dispositif (1) à une hauteur prédéterminée pour réaliser la séparation de l'intercalaire (3), en maintenant centrés les intercalaires les plus élevés dans la pile ; et
actionnement du mouvement vers le haut des moyens d'aspiration (81) et immédiatement ensuite du mouvement vers le bas afin de faciliter la séparation du ou des intercalaires possibles fixés à l'intercalaire (3) le plus haut dans la pile, et obtention d'un prélèvement sûr uniquement de l'intercalaire (3) le plus haut qui doit être traité.

11. Procédé pour la préhension d'un intercalaire (3) selon la revendication précédente suivi du procédé pour la préhension d'une palette (2) selon la revendication 9.

12. Procédé pour la préhension d'un intercalaire (3) selon la revendication précédente, dans lequel entre les étapes de préhension d'un intercalaire (3) et les étapes de préhension d'une palette (2), les étapes suivantes sont prévues :
retrait de la force de poussée descendante des vérins pneumatiques (82), auxquels les moyens d'aspiration (81) qui maintiennent l'intercalaire (3) sont fixés ;
déplacement de l'ensemble du dispositif (1) vers le bas, lesdits vérins pneumatiques (82) étant poussés vers le haut, jusqu'à ce que la sonde du dispositif (1) détecte le sommet de la pile de palettes (2) ; et
maintien de la hauteur verticale des moyens d'aspiration (81) en bloquant le circuit du vérin pneumatique pour les vérins (82) avec des clapets antiretour situés sur les conduits pour le mouvement vers le haut des vérins (82), afin que l'intercalaire (3) ne soit pas en contact avec la palette (2) et pour empêcher les problèmes possibles de mouvement de l'intercalaire en raison du coulissement possible entre l'intercalaire et la palette.
